# EUROPEAN PATENT SPECIFICATION

(11) **EP 3 879 748 B1**
(45) Date of publication and mention of the grant of the patent: **31.12.2025**
(21) Application number: 20161803.0
(22) Date of filing: 09.03.2020
(51) Int. Cl.: H04L 9/08

(54) **IMMORTAL CRYPTOGRAPHIC DEVICE KEYS**
UNENDLICHE KRYPTOGRAPHISCHE VORRICHTUNGSSCHLÜSSEL
CLÉS DE DISPOSITIF CRYPTOGRAPHIQUE IMMORTELS

(43) Date of publication of application: 15.09.2021
(73) Proprietor: ABB Schweiz AG, 5400 Baden (CH)
(72) Inventor: Oriol, Manuel, 8005 Zürich (CH); Yu, Der-Yeuan, 8050 Zürich (CH)
(74) Representative: Zimmermann & Partner Patentanwälte mbB

(56) References cited:
- US-A1- 2016 210 099
- US-A1- 2019 173 675
- RAY APALA ET AL: "Bluetooth Low Energy Devices Security Testing Framework", 2018 IEEE 11TH INTERNATIONAL CONFERENCE ON SOFTWARE TESTING, VERIFICATION AND VALIDATION (ICST), IEEE, 9 April 2018 (2018-04-09), pages 384 - 393, XP033351414, [retrieved on 20180525], DOI: 10.1109/ICST.2018.00045

## Description

### TECHNICAL FIELD

Embodiments of the present disclosure relate to connected industrial field devices, i.e., embedded devices used in industrial applications such as production, natural resource extraction and logistics and having sensors and/or other field functions relevant for that purpose. Embodiments in particular relate to a cryptographic device key management method for these field devices, wherein the cryptographic device keys are organized in a cryptographic device key stack and are used for establishing a data connection with other devices. Further embodiments relate to industrial field devices having such a cryptographic device key stack.

### BACKGROUND

In industrial applications such as production, natural resource extraction and logistics, it is very useful to use connected industrial field devices for data gathering and automation. These industrial field devices are typically small and have limited capabilities compared to full computers, e.g., using an embedded system, yet are able to be connected to a network and/or a hub device for data communication. In other words, they offer the advantages of IoT (Internet of Things) devices in an industrial setting.

Such IoT devices, used in an industrial setting, allow for example gathering sensor data from a wide variety of places, particularly remote places that are difficult to access. Other applications of IoT devices allow for retrofitting production lines or just in general allow for gathering sensor data. However, these industrial field devices (IoT devices) are designed to be small and as such only provide for a limited storage capacity for data to be gathered. Further, these devices need to be accessed by a user to download the data onto larger storage systems, especially when the IoT device is not connected to the Internet or any other network. Managing multiple users can be quite challenging for the IoT device, particularly when a secure connection is desired.
US2019/173675A1 describes a crypto-erasure resilient to network outage; US2016/210099A1 describes a continuous glucose monitor communication with multiple display devices; Ray Apala et al: "Bluetooth Low Energy Devices Security Testing Framework", 2018 IEEE 11th INTERNATIONAL CONFERENCE ON SOFTWARE TESTING, VERIFICATION AND VALIDATION (ICST), IEEE, 9 April 2018, pages 384-393, DOI: 10.1109/ICST.2018.00045 describes a Bluetooth low energy devices security testing framework.

Accordingly, in view of the above, there is a demand for improving the management of multiple users to be connected securely, which at least partially overcomes the problems of the state of the art.

### SUMMARY

In light of the above, a method for managing cryptographic device keys in an industrial field device according to claim 1 and a system according to claim 14 are provided. Further aspects, advantages, and features are apparent from the dependent claims, the description, and the accompanying drawings.

According to an aspect of the present disclosure, a method for managing cryptographic device keys is provided. The method includes storing a plurality of cryptographic device keys in a key stack of the industrial field device. The method further includes determining a respective immortality status for each of the cryptographic device keys and selecting one of the cryptographic device keys for being deleted, whereby those of the cryptographic device keys having a positive immortality status are systematically blocked from being deleted. The immortality status is a flag designating keys as immortal and wherein immortal keys are protected from being deleted.

Cryptographic device keys are created when two devices initiate a secure communication channel with each other. This process is referred to as pairing. The two devices then use the generated cryptographic device keys to encrypt and or authenticate the messages exchanged between them.

According to a further aspect of the present disclosure, an industrial field device is disclosed. The industrial field device has a communication unit having a memory with a key stack for storing cryptographic device keys therein, the communication unit having a key stack controller adapted to execute the method described herein.

Accordingly, beneficially a method for managing cryptographic device keys is provided which can improve managing device IDs and cryptographic device keys for secure data connections without re-pairing.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: shows an exemplary method for managing cryptographic device keys according to embodiments described herein;
- Fig. 2: shows an exemplary schematic for stacks in an industrial field device with exemplary positive and negative entries for an immortality status.

### DETAILED DESCRIPTION OF EMBODIMENTS

Reference will now be made in detail to the various embodiments, one or more examples of which are illustrated in each figure. Each example is provided by way of explanation and is not meant as a limitation.

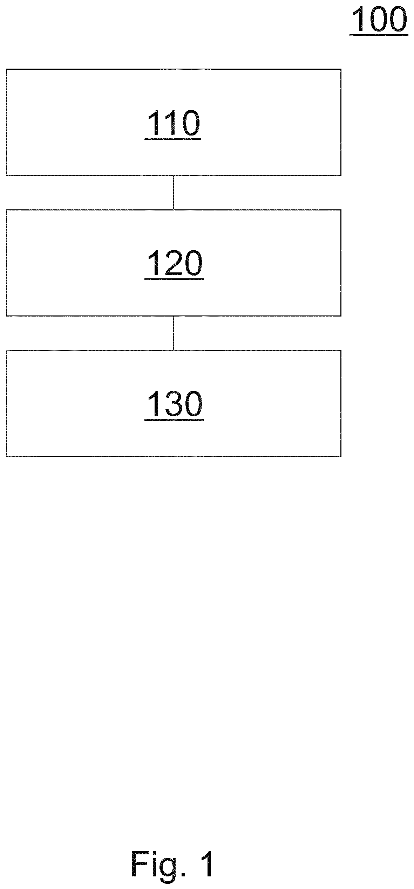

With exemplary reference to Fig. 1, a method 100 for managing cryptographic device keys in an industrial field device according to the present disclosure is described. Fig. 1 shows a schematic for a method 100 for managing cryptographic device keys in an industrial field device. The method 100 includes storing 110 a plurality of cryptographic device keys in a key stack of the industrial field device, determining 120 a respective immortality status for each of the cryptographic device keys and selecting 130 one of the cryptographic device keys for being deleted.

Next, aspects relating to these individual steps are described in more detail. Thereby, features illustrated or described as part of one aspect or embodiment can be used on or in conjunction with any other aspect or embodiment. It is intended that the present disclosure includes any such combinations and variations.

First, aspects relating generally to the managing of cryptographic device keys in an industrial field device are described.

An industrial field device as used herein is a small, low-power system (typically power consumption less than 1 W). According to an aspect, the industrial field device has a power supply, a control unit and a communication unit, both being possibly realized on a single integrated circuit. The system and method described herein may for example be implemented in the device's communication unit.

The industrial field device may have a generic or specialized purpose (e.g., as an industrial sensor unit) and may be used for automation in an industrial setting such as production, natural resource extraction or logistics. In a particular example the device may be useful for / used in a pumping station and/or in the field of mining. The industrial field device is herein also referred to as an Internet of Things (IoT) device, whereby it is understood that the IoT device is used in an industrial context.

For communication, the field device, in particular its communication unit, is adapted to communicate to another device, herein referred to as connection device, via a wired or wireless (data) connection standard protocol. According to an aspect, the protocol may for example be Bluetooth (BT, BTLE, etc.), Zigbee, ANT+, WIFI, or LAN, but may be analogously another protocol having a key stack.

According to an aspect, the protocol is protected by a key in a known manner, e.g., according to a public-private key protocol using a randomly generated public-private key pair on each side. Herein, at least one key per connection device is defined and is typically generated upon initial pairing with the connection device, and is subsequently stored in the field device's key stack to facilitate further connections with the same connection device.

Next, aspects relating to storing a plurality of cryptographic device keys in a key stack of the industrial field device are described.

For any of the above-mentioned protocols, the generation and generally the management of the keys in the key stack are well-known and described in the respective communication protocol's standard. This standard is generally adhered to, and therefore is not described in further detail herein. For example, in the case of Bluetooth / BTLE being the communication standard, the key storage and management are described in Bluetooth Core Specification 5.2.

According to an aspect, each of the cryptographic device keys may be associated to a device ID of a connecting device being connectable to the industrial field device using the respective cryptographic device key.

According to an aspect, the method may comprise establishing a connection using one of the cryptographic device keys. The connection may be established between the industrial field device and a corresponding connecting device. Each of the cryptographic device keys may be associated to a corresponding connecting device (having a connecting device ID uniquely identifying the connecting device) so that for each connecting device ID there is at most one single cryptographic device key of the key stack assigned to that device ID. The device ID may be stored in the key stack along with (or as part of) the cryptographic device key. Thus, the connection may be established using the respective cryptographic device key (corresponding to the respective connection device's ID) stored in the key stack of the industrial field device.

A connection between an industrial field device and a connecting device as used herein refers to establishing a data connection, particularly a secure data connection secured by the respective cryptographic device key. According to an aspect, establishing the connection may comprise encrypting the connection with the cryptographic device key associated with the device ID in the device ID stack of the industrial field device.

The specifics of the key generation, key data fields, and encryption method depend on the connection protocol that is used for establishing the connection between the industrial field device and the connecting device, and are well-known and described in the respective standard.

Next, aspects relating to the immortality status for each of the cryptographic device keys are described.

Due to the industrial field device having limited capabilities and resources, the number of cryptographic device keys may be limited by the available memory and/or by the design of the industrial field device. According to an aspect, the size of the key stack (number of cryptographic device keys that can be stored in the key stack) is limited to a pre-determined number.

When the number has been reached, some keys are typically overwritten and thereby deleted. As a consequence, the connection devices corresponding to the deleted keys cannot be connected anymore straightforwardly, but for example a new pairing process must be set up in which a new key is generated.

An advantage of aspects of the present invention is that it allows designating particular "immortal" keys which are at least to a certain degree protected from being deleted. This advantage is achieved by assigning a respective immortality status to each of the cryptographic device keys. In a simple example, the immortality status may be a binary flag (positive or negative), a positive flag designating the respective key as immortal and a negative flag designating the respective key as mortal. More generally, the flag can have more than 2 values, some of which are considered to be positive.

Immortal or an immortality status as used herein is derived from the area of heap management or heap allocation, where immortal types of memory can be provided. Here, immortal or a positive immortality status refers to protected entries in the (memory) stack of the industrial field device that may not or only under certain conditions be deleted from the respective (memory) stacks of the industrial field device.

Here, according to an aspect, the immortality status is used in the following manner: When some of the cryptographic device keys are overwritten or otherwise selected for being deleted, those of the cryptographic device keys having a positive immortality status can be systematically blocked from being deleted.

In this manner, keys corresponding to certain connection devices can be protected from being deleted, e.g., for connection devices which are used frequently or that are otherwise designated as being of particular importance.

Next, it is described how, according to aspects of the invention, the immortality status for the cryptographic device keys is determined.

According to an aspect, the default immortality status of a cryptographic device key (i.e., unless determined otherwise by a particular rule) is a mortal status.

According to an aspect, an immortality status may be determined based on a connection history for the corresponding device ID (i.e., on information regarding past connections as stored in the memory of the industrial field device). The connection history may, in particular, include a frequency, or an (averaged) interval of past connections with the connecting device using the respective cryptographic device key. The method may, for example, include writing a timestamp associated with the corresponding device ID into a memory of the industrial field device when a connection of the connection device with the respective device ID and the industrial field device is successfully established, and the determining may include evaluating the timestamp(s) of past connections with the connection device.

According to an aspect the immortality status may be a binary value. In this case the immortality status may be set to "immortal" if a score number - e.g., the connection number (total past number or past number in a predetermined time period, such as for example a year, a month, a week, a day, additionally or alternatively less than a year or more than one day), frequency (since initiation or within a predetermined time period), or time of previous connection - meets an immortality condition. The immortality condition can, for example, be that the score number exceeds a predetermined threshold value (or is below a predetermined threshold value, in case of a low score being preferable, such as in the case of the time span since previous connection). The immortality condition can also be based on a comparison with the score values of other keys (all other keys), e.g., that the score value belongs to a predetermined top-ranking number of score values when compared to the score values of the other keys.

According to an aspect, the immortality status can also be a numerical value representing an immortality rank. For example, the immortality status can be the score value itself, or a rank derived from the score value. According to an aspect, the immortality rank may be determined as a function of the frequency of successfully established connections of the industrial field device using the respective cryptographic device key in a pre-determined period of time. According to an aspect, the immortality rank may be determined based on a comparison of the number of timestamps associated with a device ID of a respective cryptographic device key or an average of time in between timestamps associated with a device ID of a respective cryptographic device key.

According to an aspect, determining the immortality status of a cryptographic device key may be based on the number of successful connections associated with the respective device ID. Determining the immortality status may comprise a comparison of the number of successful connections of a first device ID and a second device ID different from the first device ID. Determining the immortality status may comprise an analysis or comparison of the number of successful connections using the cryptographic device key (associated with a device ID), e.g., a comparison with other or all successful connections. Determining the immortality status may comprise a comparison of the number (e.g., the frequency being the number per time or the number from a predetermined starting time or event) of successful connections associated with a device ID of a pre-selected or pre-determined number of successful connections associated with a device ID in the device ID stack of the industrial field device. A pre-determined number of successful connections may also be referred to as threshold for determining an immortality status. For example, a user may pre-determine that five or more successful connections may be used as threshold for assigning a positive immortality status to a cryptographic device key (associated with a device ID). A user may be a human operator.

According to an aspect, the number of cryptographic device keys having a positive immortality status may be limited by an upper threshold number. This can for example be achieved by raising the predetermined threshold value/condition (defining more strict criteria for the key to be immortal) if the number of cryptographic device keys having a positive immortality status exceeds the upper threshold number, until the number of cryptographic device keys having a positive immortality status no longer exceeds the upper threshold number.

Limiting the number of positive immortality statuses may beneficially allow for a number of "always available" cryptographic device keys for connecting to the industrial field device and a number of delete-able cryptographic device keys to allow new connecting devices to establish a connection with the industrial field device.

Next, aspects relating to the selecting one of the cryptographic device keys for being deleted are described.

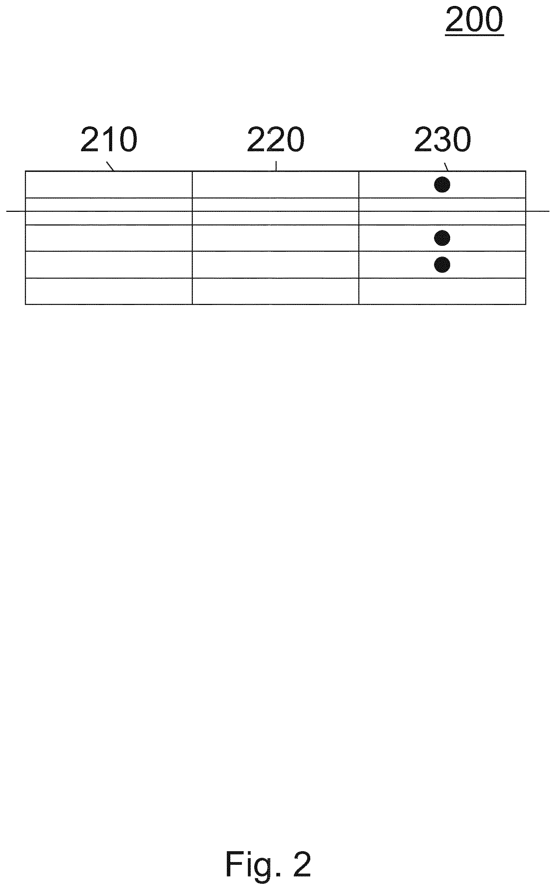

An embodiment of a cryptographic device key stack, useful for illustrating this step, is shown in Fig. 2. Herein, a schematic for the stack in a memory 200 of an industrial field device with exemplary positive and negative entries for an immortality status is shown. Each of the cryptographic device keys 220 in the stack has an associated device ID 210 and an immortality status 230, the associated entries being represented by respective lines in Fig. 2.

When determining an entry in the memory for being deleted, for example, a memory control routine of the field device (e.g., upon carrying out garbage cleaning or upon adding a new entry) exclusively selects one of the entries with a negative immortality status for being deleted. Herein, any empty stack entries may also be regarded as entries with a negative immortality status, (default setting). The selected entry is then deleted. In Fig. 2 the deleted entry is shown with the horizontal line going through it, the entry encompassing the cryptographic device key 220 and any associated data fields (e.g., device ID 210 and immortality status 230). To establish a connection with a new, unknown or device whose information is not yet saved in the memory, new entries are added into the respective data fields 210, 220, 230 of the stack, to allow for a secure connection according to a (data) connection protocol.

Those of the cryptographic device keys having a positive immortality status are systematically blocked from being deleted. The wording "those" refers to exactly the cryptographic device keys having a positive immortality status and no more and no less. It can also refer to a single cryptographic device keys in case of only a single key having a positive immortality status.

In the above example, the blocking was performed by considering only those keys with a negative immortality status. Equivalently, all keys may be considered, and a subsequent check for the immortality status may be performed. In case of a positive immortality status, a new selection may be initiated until an entry with a negative immortality status is found or until some timeout condition is met.

According to an aspect, the method may comprise adding a new cryptographic device key to the stack. The adding the newly added cryptographic device key may thereby overwrite a cryptographic device key having been selected for being deleted. The cryptographic device key having been selected for being deleted is systematically selected from the cryptographic device keys having a negative immortality status.

According to an aspect, selecting one of the cryptographic device keys for being deleted may comprise determining a cryptographic device key for deletion based on the immortality status of the cryptographic device key. The selecting may comprise deleting the cryptographic device key and the associated device ID (and any other associated information) from the respective stacks based on the determination.

According to an aspect, a cryptographic device key having been selected for being deleted may have a lowest rank for the immortality status. Selecting a cryptographic device key for being deleted may comprise determining a lowest rank. According to an aspect, a cryptographic device key having been selected for being deleted may have a rank for the immortality status not satisfying an immortality condition, e.g., a threshold condition for the rank.

Next, some special cases are discussed. One case is an excessive number of immortality keys, which should be avoided. **In** one aspect, if the number of immortal keys exceeds a predetermined threshold, the immortality status of some or all connections may be set to a negative, for example randomly or according to the lowest immortality ranks.

According to an aspect, if deleting is not successful, the connection with the connecting device may be rejected. For example, in the case that a new connecting device would like to connect to the industrial field device, the method may perform according to embodiments as described above. However, in, for example, the case that either all stored cryptographic device keys in the key stack have a positive immortality status, a selecting one of the cryptographic device keys for being deleted may not be successful, or in the case that a deleting of a cryptographic device key is not successful for any other reason, the connection to the industrial field device may be refused or rejected.

The step of blocking the cryptographic device keys having a positive immortality status from being deleted relates to the normal operation of the apparatus or method, but does not exclude that a cryptographic device key having a positive immortality status may nevertheless be deleted in exceptional circumstances. For example, such a cryptographic device key having a positive immortality status may still be deleted during a factory reset operation, under a low memory condition (e.g., by a garbage collection routine), and/or when the total number of cryptographic device keys having a positive immortality status exceeds a threshold, for example.

Thus, according to an aspect, determining a cryptographic device key for deletion based on the immortality status of the cryptographic device key may encompass a cryptographic device key that has a positive immortality status. The determining may comprise a selection that takes all cryptographic device keys having a positive immortality status into account. This selection may be based on ranking the cryptographic device keys having a positive immortality status according to at least one of their connection history, connection frequency and number of connections or on a singleton of said criteria or a combination of two of said criteria.

Next, aspects relating to the industrial field device architecture and the communications network are discussed. According to an aspect, the industrial field device may comprise a network interface for connecting the device to a data network, in particular a global data network. The communications unit may be configured for managing communications over this network interface. The data network may be a TCP/IP network such as Internet or may be based on another wired or wireless standard such as Bluetooth.

According to an aspect, the industrial field device is operatively connected to the network interface for carrying out commands received from the data network. The commands may include a control command for controlling the device to carry out a task such as reading out and/or transmitting sensor data. In this case, the device/controller is adapted for carrying out the task in response to the control command. The commands may include a status request. In response to the status request, or without prior status request, the device/controller may be adapted for sending a status information to the network interface, and the network interface is then adapted for sending the status information over the network. The commands may include an update command including update data. In this case, the device/controller is adapted for initiating an update in response to the update command and using the update data.

According to an aspect, the data network may comprise distributed storage units such as Cloud. Depending on the application, the Cloud can be in form of public, private, hybrid or community Cloud.

While the foregoing is directed to embodiments, other and further embodiments may be devised without departing from the basic scope, and the scope is determined by the claims that follow.

## Claims

1. A method (100) for managing cryptographic device keys in an industrial field device, the method (100) comprising:
storing (110) a plurality of cryptographic device keys in a key stack of the industrial field device;
determining (120) a respective immortality status for each of the cryptographic device keys, and
selecting (130) one of the cryptographic device keys for being deleted,
**characterised in that** those of the cryptographic device keys having a positive immortality status are systematically blocked from being deleted;
wherein the immortality status associated with a respective one of the cryptographic device keys is a flag and in case the flag is positive, the respective cryptographic device key is protected from being deleted.

2. The method (100) of the preceding claim, wherein
each of the cryptographic device keys is associated to a device ID of a connecting device being connectable to the industrial field device using the respective cryptographic device key, and wherein the respective immortality status is determined based on a connection history for the device ID.

3. The method (100) of any one of the preceding claims, wherein the method (100) further comprises
adding a new cryptographic device key to the stack, thereby overwriting, by the newly added cryptographic device key, the cryptographic device key having been selected for being deleted.

4. The method (100) of any one of the preceding claims, wherein the method (100) further comprises
establishing a connection, using one of the cryptographic device keys, of the industrial field device to a corresponding connecting device.

5. The method (100) of claim 4, wherein establishing the connection to the device comprises
determining a corresponding device ID of the connecting device in a device ID stack of the industrial field device.

6. The method (100) of claims 4 or 5, wherein establishing the connection comprises
encrypting the connection with the cryptographic device key associated with the device ID in the device ID stack of the industrial field device.

7. The method (100) of any of the preceding claims, wherein selecting one of the cryptographic device keys for being deleted comprises:
determining a cryptographic device key for deletion based on the immortality status of the cryptographic device key,
deleting the cryptographic device key and the associated device ID from the respective stacks based on the determination.

8. The method (100) of any of the preceding claims, wherein determining the immortality status of a cryptographic device key is based on the connection history, and in particular on a number of successful past connections associated with the respective device ID.

9. The method (100) of any of the preceding claims, wherein the number of cryptographic device keys having an immortality status is limited to a pre-determined threshold.

10. The method (100) of any of the preceding claims, wherein the immortality status is a binary value or a numerical value representing an immortality rank.

11. The method (100) of any of the preceding claims, wherein the immortality status is set by a user.

12. The method (100) of any of the preceding claims, further comprising connecting the industrial field device, via a connecting device acting as an intermediary, to a data network, and transmitting operations data relating to the operation of the industrial field device between the data network and the industrial field device.

13. The method (100) of claim 12, wherein the data network includes a cloud-based and/or central industrial control unit.

14. An industrial field device having a communication unit having a memory (200) with a key stack for storing cryptographic device keys (220) therein, the communication unit having a key stack controller adapted to execute the method (100) of any of the preceding claims.

15. The industrial field device of claim 14, the communication unit further comprising a network interface for connecting the device to a data network, wherein the industrial field device is operatively connected to the network interface for at least one of carrying out a command received from the data network and sending device status information to the data network.

## Patentansprüche

1. Verfahren (100) zum Managen von kryptographischen Vorrichtungsschlüsseln in einer industriellen Feldvorrichtung, wobei das Verfahren (100) Folgendes umfasst:
Speichern (110) einer Vielzahl kryptographischer Vorrichtungsschlüssel in einem Schlüsselstapel der industriellen Feldvorrichtung;
Bestimmen (120) eines jeweiligen Ewigkeitsstatus für jeden der kryptographischen Vorrichtungsschlüssel und
Auswählen (130) eines der kryptographischen Vorrichtungsschlüssel, um gelöscht zu werden, **dadurch gekennzeichnet, dass**
das Löschen derjenigen der kryptographischen Vorrichtungsschlüssel, die einen positiven Ewigkeitsstatus aufweisen, systematisch gesperrt ist;
wobei der Ewigkeitsstatus, der einem jeweiligen der kryptographischen Vorrichtungsschlüssel zugeordnet ist, ein Merker ist, wobei dann, wenn der Merker positiv ist, der jeweilige kryptographische Vorrichtungsschlüssel davor geschützt ist, gelöscht zu werden.

2. Verfahren (100) nach dem vorhergehenden Anspruch, wobei
jeder der kryptographischen Vorrichtungsschlüssel einer Vorrichtungs-ID einer Verbindungsvorrichtung zugeordnet ist, die mit der industriellen Feldvorrichtung unter Verwendung des jeweiligen kryptographischen Vorrichtungsschlüssels verbindbar ist, und wobei der jeweilige Ewigkeitsstatus basierend auf einer Verbindungshistorie für die Vorrichtungs-ID bestimmt wird.

3. Verfahren (100) nach einem der vorhergehenden Ansprüche, wobei das Verfahren (100) ferner Folgendes umfasst:
Hinzufügen eines neuen kryptographischen Vorrichtungsschlüssels zu dem Stapel, dadurch Überschreiben des kryptographischen Vorrichtungsschlüssels, der ausgewählt worden ist, um gelöscht zu werden, durch den neu hinzugefügten kryptographischen Vorrichtungsschlüssel.

4. Verfahren (100) nach einem der vorhergehenden Ansprüche, wobei das Verfahren (100) ferner Folgendes umfasst:
Herstellen einer Verbindung der industriellen Feldvorrichtung mit einer entsprechenden Verbindungsvorrichtung unter Verwendung eines der kryptographischen Vorrichtungsschlüssel.

5. Verfahren (100) nach Anspruch 4, wobei das Herstellen der Verbindung mit der Vorrichtung Folgendes umfasst
Bestimmen einer entsprechenden Vorrichtungs-ID der Verbindungsvorrichtung in einem Vorrichtungs-ID-Stapel der industriellen Feldvorrichtung.

6. Verfahren (100) nach Anspruch 4 oder 5, wobei das Herstellen der Verbindung Folgendes umfasst
Verschlüsseln der Verbindung mit dem kryptographischen Vorrichtungsschlüssel, der der Vorrichtungs-ID im Vorrichtungs-ID-Stapel der industriellen Feldvorrichtung zugeordnet ist.

7. Verfahren (100) nach einem der vorhergehenden Ansprüche, wobei das Auswählen eines der kryptographischen Vorrichtungsschlüssel, um gelöscht zu werden, Folgendes umfasst:
Bestimmen eines kryptographischen Vorrichtungsschlüssels für das Löschen basierend auf dem Ewigkeitsstatus des kryptographischen Vorrichtungsschlüssels,
Löschen des kryptographischen Vorrichtungsschlüssels und der zugeordneten Vorrichtungs-ID aus den jeweiligen Stapeln basierend auf der Bestimmung.

8. Verfahren (100) nach einem der vorhergehenden Ansprüche, wobei das Bestimmen des Ewigkeitsstatus eines kryptographischen Vorrichtungsschlüssels basierend auf der Verbindungshistorie stattfindet, insbesondere auf einer Anzahl erfolgreicher früherer Verbindungen, die der jeweiligen Vorrichtungs-ID zugeordnet sind.

9. Verfahren (100) nach einem der vorhergehenden Ansprüche, wobei die Anzahl der kryptographischen Vorrichtungsschlüssel mit einem Ewigkeitsstatus auf einen vorgegebenen Schwellenwert begrenzt ist.

10. Verfahren (100) nach einem der vorhergehenden Ansprüche, wobei der Ewigkeitsstatus ein Binärwert oder ein Zahlenwert ist, der einen Ewigkeitsrang repräsentiert.

11. Verfahren (100) nach einem der vorhergehenden Ansprüche, wobei der Ewigkeitsstatus durch einen Anwender festgelegt wird.

12. Verfahren (100) nach einem der vorhergehenden Ansprüche, das ferner das Verbinden der industriellen Feldvorrichtung über eine als ein Vermittler wirkende Verbindungsvorrichtung mit einem Datennetz und das Übertragen von auf den Betrieb der industriellen Feldvorrichtung bezogenen Betriebsdaten zwischen dem Datennetz und der industriellen Feldvorrichtung umfasst.

13. Verfahren (100) nach Anspruch 12, wobei das Datennetz eine cloud-basierte und/oder zentrale industrielle Steuereinheit enthält.

14. Industrielle Feldvorrichtung mit einer Kommunikationseinheit, die einen Speicher (200) mit einem Schlüsselstapel zum Speichern kryptographischer Vorrichtungsschlüssel (220) darin aufweist, wobei die Kommunikationseinheit eine Schlüsselstapel-Steuereinheit aufweist, die dafür ausgelegt ist, das Verfahren (100) nach einem der vorhergehenden Ansprüche auszuführen.

15. Industrielle Feldvorrichtung nach Anspruch 14, wobei die Kommunikationseinheit ferner eine Netzschnittstelle zum Verbinden der Vorrichtung mit einem Datennetz umfasst, wobei die industrielle Feldvorrichtung für wenigstens eines des Ausführens eines vom Datennetz empfangenen Befehls und des Sendens von Vorrichtungsstatusinformationen an das Datennetz betriebstechnisch mit der Netzschnittstelle verbunden ist.

## Revendications

1. Procédé (100) de gestion de clés cryptographiques de dispositif dans un dispositif de terrain industriel, le procédé (100) comprenant :
le stockage (110) d'une pluralité de clés cryptographiques de dispositif dans une pile de clés du dispositif de terrain industriel ;
la détermination (120) d'un statut d'immortalité respectif pour chacune des clés cryptographique de dispositif, et
la sélection (130) de l'une des clés cryptographiques de dispositif pour l'effacer, **caractérisé en ce que**
celles des clés cryptographiques de dispositif qui ont un statut d'immortalité positif sont systématiquement empêchées d'être effacées ;
le statut d'immortalité associé à l'une respective des clés cryptographiques de dispositif est un drapeau et, dans le cas où le drapeau est positif, la clé cryptographique de dispositif respective est protégée d'un effacement.

2. Procédé (100) selon la revendication précédente, dans lequel
chacune des clés cryptographiques de dispositif est associée à un ID de dispositif d'un dispositif de connexion apte à être connecté au dispositif de terrain industriel au moyen de la clé cryptographique de dispositif respective, et dans lequel le statut d'immortalité respectif est déterminé sur la base d'un historique de connexion pour l'ID de dispositif.

3. Procédé (100) selon l'une quelconque des revendications précédentes, lequel procédé (100) comprend en outre :
l'ajout d'une nouvelle clé cryptographique de dispositif à la pile, en écrasant la clé cryptographique de dispositif sélectionnée pour être effacée par écriture de la nouvelle clé cryptographique de dispositif nouvellement ajoutée.

4. Procédé (100) selon l'une quelconque des revendications précédentes, lequel procédé (100) comprend en outre :
l'établissement d'une connexion, au moyen des clés cryptographiques de dispositif, du dispositif de terrain industriel à un dispositif de connexion correspondant.

5. Procédé (100) selon la revendication 4, dans lequel l'établissement de la connexion au dispositif comprend la détermination d'un ID de dispositif correspondant du dispositif de connexion dans une pile d'ID de dispositif du dispositif de terrain industriel.

6. Procédé (100) selon la revendication 4 ou 5, dans lequel l'établissement de la connexion comprend le chiffrement de la connexion avec la clé cryptographique de dispositif associée à l'ID de dispositif de la pile d'ID de dispositif du dispositif de terrain industriel.

7. Procédé (100) selon l'une quelconque des revendications précédentes, dans lequel la sélection de l'une des clés cryptographiques de dispositif pour qu'elle soit effacée comprend :
la détermination d'une clé cryptographique de dispositif à effacer sur la base du statut d'immortalité de la clé cryptographique de dispositif,
l'effacement de la clé cryptographique de dispositif et de l'ID de dispositif associé des piles respectives sur la base de la détermination.

8. Procédé (100) selon l'une quelconque des revendications précédentes, dans lequel la détermination du statut d'immortalité d'une clé cryptographique de dispositif est basée sur l'historique de connexion, et en particulier sur un nombre de connexions passées réussies associées à l'ID de dispositif respectif.

9. Procédé (100) selon l'une quelconque des revendications précédentes, dans lequel le nombre de clés cryptographiques de dispositif ayant un statut d'immortalité est limité à un seuil prédéterminé.

10. Procédé (100) selon l'une quelconque des revendications précédentes, dans lequel le statut d'immortalité est une valeur binaire ou une valeur numérique représentant un rang d'immortalité.

11. Procédé (100) selon l'une quelconque des revendications précédentes, dans lequel le statut d'immortalité est défini par un utilisateur.

12. Procédé (100) selon l'une quelconque des revendications précédentes, comprenant en outre la connexion du dispositif de terrain industriel à un réseau de données, via un dispositif de connexion agissant en tant qu'intermédiaire, et la transmission de données opérationnelles relatives au fonctionnement du dispositif de terrain industriel entre le réseau de données et le dispositif de terrain industriel.

13. Procédé (100) selon la revendication 12, dans lequel le réseau de données comporte une unité de contrôle industrielle centralisée et/ou basée sur le cloud.

14. Dispositif de terrain industriel ayant une unité de communication comportant une mémoire (200) contenant une pile de clés pour le stockage de clés cryptographiques de dispositif (220), l'unité de communication ayant un contrôleur de pile de clés conçu pour exécuter le procédé (100) selon l'une quelconque des revendications précédentes.

15. Dispositif de terrain industriel selon la revendication 14, l'unité de communication comprenant en outre une interface de réseau pour la connexion du dispositif à un réseau de données, le dispositif de terrain industriel étant connecté fonctionnellement à l'interface de réseau pour au moins l'une des opérations suivantes : exécution d'une commande reçue du réseau de données et envoi d'informations de statut du dispositif au réseau de données.
